# EUROPEAN PATENT SPECIFICATION

(11) **EP 3 114 865 B1**
(45) Date of publication and mention of the grant of the patent: **20.07.2022**
(21) Application number: 14708859.5
(22) Date of filing: 06.03.2014
(51) Int. Cl.: H04W 12/72, H04W 12/069, H04L 9/40, H04W 12/03, H04W 12/122, H04W 84/12, H04W 48/16

(54) **USING SERVICES OF A MOBILE PACKET CORE NETWORK**
VERWENDUNG VON DIENSTEN EINES MOBILEN PAKETKERNNETZWERKES
UTILISATION DE SERVICES D'UN RÉSEAU CENTRAL DE COMMUNICATIONS PAR PAQUETS ENTRE TERMINAUX MOBILES

(43) Date of publication of application: 11.01.2017
(73) Proprietor: Vodafone GmbH, 40549 Düsseldorf (DE)
(72) Inventor: BINDRIM, Walter, 45721 Haltern am See (DE); CORREIA FERNANDES, António Carlos, 40489 Düsseldorf (DE)
(74) Representative: Weisbrodt, Bernd
(86) International application number: PCT/EP2014/054391
(87) International publication number: WO 2015/131949

(56) References cited:
- EP-A1- 2 658 301
- WO-A1-2013/169161
- US-A1- 2013 097 710
- US-B1- 8 594 628
- "3rd Generation Partnership Project; Technical Specification Group Core Network and Terminals; Access to the 3GPP Evolved Packet Core (EPC) via non-3GPP access networks; Stage 3 (Release 11)", 3GPP STANDARD; 3GPP TS 24.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.0.0, 28 September 2011 (2011-09-28), pages 1-58, XP050554126, [retrieved on 2011-09-28]

## Description

The present invention relates to a method for using services of a mobile packet core network in a communication system comprising a mobile device, a core network, the mobile packet core network and a wireless radio access network, whereby the mobile device accesses the mobile packet core network via the wireless radio access network.

The present invention further relates to a network entity of a mobile packet core network of a communication system comprising a mobile device, a core network, the mobile packet core network and a wireless radio access network, to.which the mobile device can establish a secure tunnel connection.

Another object of the present invention is a mobile device in a communication system comprising the mobile device, a core network, a mobile packet core network and a wireless radio access network.

Another object of the present invention is an ANDSF Server of a communication system comprising a mobile device, a core network, a mobile packet core network and a wireless radio access network.

In view of the growth of mobile network traffic, it has been considered to provide the possibility to use mobile data over a wireless radio access network, for example a Wi-Fi technology, as an additional radio access network. In this approach, the existing infrastructure of a mobile packet core network is used to a large extent. However, also security within the communication system comprising a mobile device, a core network, a mobile packet core network and a wireless radio access network should not be decreased, when Wi-Fi access networks are used. Especially there is a need for a solution allowing a secure access to core services of a mobile packet core network and also respectively a secure access to the internet.

In this respect, it has already been proposed to provide authentication methods, such as EAP-SIM / AKA, WPA2 and so called IPsec tunnels for Wi-Fi access to a mobile packet core network, which is also referred to as Mobile Operator Network (MON). Whereas the identification of the person of the user of the communication network may be considered in such approaches, for example by means of using the MSISDN (MSISDN: Mobile Subscriber Integrated Services Digital Network) and/or the IMSI (IMSI: International Mobile Subscriber Identity) representing the subscriber identification, the overall security remains flawed. In particular, the authorization of a mobile device to be used in a communication system cannot be monitored or denied in such approaches.

To classify available scenarios how a mobile device could connect via a wireless radio access network, for example a Wi-Fi, to the mobile packet core network it is to distinguish between a trusted Wi-Fi access and an untrusted Wi-Fi access. For both scenarios (trusted Wi-Fi access and untrusted Wi-Fi access) solutions are available in the standards.

The standard based solution to connect a trusted Wi-Fi access whereby the Wi-Fi air interface and Wi-Fi transport are secure, to the mobile packet core network could be supported via available nodes of the communication system, for example via TWGs (TWG: Trusted Wireless Gateway) connected to the PDN (PDN: Packet Data Network) via PGW in 4G networks or via a similar node/function in 3G networks connected to the GGSN (GGSN: Gateway GPRS (GPRS: general packet radio service) Support Node). In this case all functions in the mobile packet core network could be reused including the availability to offer core services of the mobile packet core network to customers respectively subscribers of the MNO as users. In this case the user plane traffic will be routed via the traffic management function based on the MSISDN of the customer to the core service function in the Gi LAN. The architecture is for example disclosed with 3GPP TR 23.852 for trusted networks only or 3GPP TS 23.402 for non-3GPP accesses.

Similar functions have been standardized in 3GPP for an untrusted Wi-Fi access, for example public Wi-Fi in a coffee shop or the like. In this case an IPsec tunnel from the mobile device towards the mobile packet core network will be established. With this solution all services of an MNO including core services could be offered to a customer as the authentication will be done by MSISDN or IMSI. Architecture for this approach is for example disclosed with 3GPP TS 23.402 or for 3G networks with 3GPP TS 23.234.

Core services of a mobile packet core network of an MNO (Mobile Network Operator) for example offer customers respectively subscribers secure internet access, especially a virus scanner or anti-malware, particularly when such services are booked or subscribed by the customers. In such cases the traffic management function of the mobile packet core network routes the traffic from customers which have booked the service in that case towards the respective function (for example virus scanner or anti-malware) in the mobile packet core network of the MNO. The identification of the customer is based in the MSISDN or the IMSI (IMSI: International Mobile Subscriber Identity). Both, the MSISDN and the IMSI, are available during the registration process of a mobile device which is usable in a mobile packet core network in the mobile packet core network, but this might be different in some cases if the mobile device will be connected to the mobile packet core network via a wireless radio access network, for example via Wi-Fi, especially since the impact on the mobile device is limited.

US 2013/0097710 A1 relates to mobile risk assessment, wherein at least one available wireless access point is identified at a particular location and a connection is established with the available wireless access point, wherein communication is attempted with a trusted endpoint over the wireless access point and the attempted communication with the trusted endpoint over the wireless access point is monitored to assess risk associated with the wireless access point. Results of the assessment can be reported to an access point risk manager and risk associated with future attempts to use the wireless access point can be assessed based at least in part on the reported assessment results.

3GPP Technical Specification 24.302 (Version 8.9.0) specifies the discovery and network selection procedures for access to 3GPP Evolved Packet Core (EPC) via non-3GPP access networks and includes Authentication and Access Authorization using Authentication, Authorization and Accounting (AAA) procedures used for the interworking of the 3GPP EPC and the non-3GPP access networks.

EP 2 658 301 A1 relates to non-mobile authentication for mobile network gateway connectivity and discloses a system including a mobile service provider network, an alternate access network having an access gateway, and an authentication server of the mobile service provider network that receives a network access request. Therein, a subscriber database responds to the network access request with virtual mobility information, wherein the network access request does not include an International Mobile Subscriber Identity (IMSI), and wherein the virtual mobility information comprises a virtual IMSI. The access gateway uses the virtual mobility information to signal a mobile network gateway of the mobile service provider network to establish a service session for the wireless device over the alternate access network that is anchored by the mobile network gateway.

US 8,594,628 B1 discloses network devices which provide seamless offloading of data communications from a service provider's cellular network to an alternate access network outside of the service provider's cellular network. Therein, after a cellular mobile device has initially been authenticated by devices in the cellular network to communicate with a packet data network via the cellular network, the cellular mobile device is configured to leverage its prior authentication on the cellular network and automatically obtain credentials for use in logging onto the alternate access network, without requiring any action by a user of the cellular mobile device. After the cellular mobile device is logged on to the alternate access network, the cellular mobile device sends wireless data communications to the packet data network via the alternate access network instead of the cellular network.

WO 2013/169161 A1 discloses a radio communication system comprising a first access network arranged to operate according to a first Radio Access Technology, a second access network arranged to operate according to a second Radio Access technology, and a user device which is connectable to the first access network and to the second access network. The system also comprises an authentication node arranged to identify the user device, when seeking access to the second access network, through a user device identifier for the user device, wherein the user device identifier is associated with the first access network. Further, a query node provides information about a context of the user device in the first access network based on the user device identifier and an access selection node generates an access selection decision for the access sought by the user device to the second access network based on the provided context information. The system then causes the access selection decision to be executed.

In view of this state of the art, it is the object of the present invention to provide a solution which allows customers respectively subscribers with a mobile device, especially customers with legacy 2G, 3G or 4G devices having also Wi-Fi capabilities and customers with Wi-Fi only devices, to use a wireless radio access network, especially Wi-Fi, as access towards the mobile packet core network for using services of the mobile packet core network, especially core services of the mobile packet core network such as a virus scanner or anti-malware.

As technical solution the invention proposes a method and a system for using services of a mobile packet core network in a communication as defined in the appended claims.

The communication system according to the present invention comprises a mobile device, a core network, a mobile packet core network and a wireless radio access network.

The mobile device can be a mobile phone, smart phone, tablet or any other mobile communication terminal capable of connecting to a wireless radio access network. The mobile device may also be referred to as user equipment (UE), mobile terminal or mobile station (MS). In particular the mobile device could support a no classic mobile radio access capability, for example Wi-Fi only, or is a mobile communication terminal of the mobile packet core network. The later the mobile device is capable of connecting to the mobile packet core network also via radio access networks which are different from the wireless radio access networks, which are for example GRAN, GERAN, UTRAN or E-UTRAN. Thus present invention supports mobile devices with a SIM (SIM: Subscriber Identity Module) or an USIM (USIM: Universal SIM) and also mobile devices without a SIM or an USIM, for example an iPad or the like with Wi-Fi only.

The core network is preferably a packet switched PS domain network. Via the core network, the mobile device can access for example the Internet.

The mobile packet core network is also referred to as the MNO network. The mobile packet core network can in particular be 2G, 3G, and/or LTE networks according to the 3GPP standards. The mobile packet core network comprises entities such as data bases, for example Home Location Register (HLR), Home Subscriber Server (HSS), Visitor Location Register (VLR), Equipment Identity Register (EIR) as well as service entities such the Mobile Switching Centre (MSC), Short Message Service Centre (SMSC) and an Authentication, Authorization and Accounting Server (AAA server). The AAA server will hereinafter also simply be referred to as AAA.

The wireless radio access network is a radio access network for access to the mobile packet core network. It should be noted that this radio access network hereinafter will be referred to as wireless radio access network in order to distinguish it from other radio access networks which may be used by the mobile device to access the mobile packet core network. The wireless radio access network can in particular be a wireless local area network (WLAN) and most preferably a Wi-Fi (Wireless Fidelity) network. The Wi-Fi network is in particular a network governed by the protocol IEEE 802.11 which defines the communication in this network. A further embodiment of the present invention suggests to use Bluetooth, a wireless technology standard for exchanging data over short distances, as the wireless radio access network for access to the mobile packet core network.

In the communication system according to the invention, wireless radio access technology is thus combined with the communication via mobile packet core network for accessing the core network, for example for retrieving content from the internet.

According to the present invention the determination of the trustworthiness of the wireless radio access network on side of the mobile device comprises a comparison of an identifier respectively identification used to signal the wireless radio access network to the mobile device with an identifier respectively identification of a wireless radio access network stored in a list within the mobile device. A preferred embodiment of the present invention is characterized in that the identifier respectively identification signaled to the mobile device is the SSID (SSID: Service Set Identifier) of the wireless radio access network and the identifier respectively identification stored in the list within the mobile device is a SSID of a wireless radio access network. Another advantageous embodiment of the present invention suggests, that the trustworthiness of the wireless radio access network is determined by an application, preferably by an ANDSF (ANDSF: Access Network Discovery and Selection Function) application, running on side of the mobile device.

In a further embodiment of the present invention the secure tunnel connection to an entity of the mobile packet core network, preferably a VPN Server (VPN: Virtual Private Network) is established by an application, preferably a VPN application, running on side of the mobile device. According to a further embodiment of the present invention the application establishing the secure tunnel connection to an entity of the mobile packet core network is started by the application determining the trustworthiness of the wireless radio access network, if the wireless radio access network is not trustworthy.

In a preferred embodiment of the present invention the application (ANDSF application) is an ANDSF Client which is be able to retrieve a certificate or credentials from an ANDSF server, able to manage the certificate or credentials on the mobile device and/or be capable to start the VPN application, especially a VPN client, on the mobile device when the identifier respectively identification used to signal the wireless radio access network to the mobile device, preferably the SSID, is considered to be an untrusted one. The VPN application, especially a VPN client is preferably previously installed or downloaded to the mobile device.

A further embodiment of the present invention suggests that the application determining the trustworthiness of the wireless radio access network and the application establishing the secure tunnel connection to an entity of the mobile packet core network are combined in a single application running on side of the mobile device. The combination of both applications (the application determining the trustworthiness of the wireless radio access network and the application establishing the secure tunnel connection to an entity of the mobile packet core network) in a single application is not necessary for the present invention but a possible embodiment.

A further advantageous embodiment of the present invention is characterized in that the entity of the mobile packet core network, preferably a VPN Server or a TTG (TTG: Tunnel Terminating Gateway) or an ePDG (ePDG: evolved Packed Data Gateway), to which the mobile device established a secure tunnel connection uses the certificate stored within the mobile device to establish a secure connection to the mobile packet core network. The certificate retrieve a MSISDN (MSISDN: Mobile Subscriber Integrated Services Digital Network) respectively a virtual MSISDN (vMSISDN) and/or an IMSI (IMSI: International Mobile Subscriber Identity) respectively a virtual IMSI (vIMSI) allocated to the user of the mobile device (UE) out of a database (DB) of the communication system. The certificate or credentials were individually created based on a MSISDN respectively a virtual MSISDN (vMSISDN) and/or an IMSI respectively a virtual IMSI (vIMSI). The relation between the certificate and a MSISDN respectively a virtual MSISDN (vMSISDN) and/or an IMSI respectively a virtual IMSI (vIMSI) is located in the database (DB) of the communication system.

A vMSISDN and/or a vIMSI is advantageously usable when the mobile device does not have a SIM (SIM: Subscriber Identity Module) respectively USIM (USIM: Universal SIM) and/or if the mobile device can access the communication system only via a wireless radio access network, preferably is a wireless-radio-access-network-only (Wi-Fi-only) device. Thus providing a vMSISDN and/or a vIMSI allows a mobile device access to the mobile packet core network via the wireless radio access network, even when the mobile device is a wireless-radio-access-network-only device. Advantageously there is no limitation for e. g. Gi-LAN services using the vMSISDN and/or the vIMSI in comparison to MSISDN and/or IMSI. Thus it is possible to use the vMSISDN and/or the vIMSI in case of untrusted networks. For this a client on the mobile device might need to be modified.

A virtual MSISDN (vMSISDN) and/or a virtual IMSI (vIMSI) according to the present invention is a piece of information or an identifier with a data format or structure similar to a MSISDN for a vMSISDN or an IMSI for a vIMSI. The virtual MSISDN (vMSISDN) and/or the virtual IMSI (vIMSI) provided are designed to use services of the mobile packet core network without having to use a SIM or USIM with a mobile device. Advantageously the virtual MSISDN (vMSISDN) and/or the virtual IMSI (vIMSI) works inside the mobile network environment or if the mobile device is changed to support this. For this the virtual MSISDN (vMSISDN) and/or the virtual IMSI (vIMSI) is advantageously stored and provided within the mobile packet core network and/or the mobile device. Thus with a virtual MSISDN (vMSISDN) and/or a virtual IMSI (vIMSI) according to the present invention advantageously services could be offered as with a standard MSISDN and/or IMSI. The services offered are preferably based on a profile stored in the mobile packet core network, for example in the HLR or the HSS. The services advantageously comprise charging services and/or authentication services of the mobile packet core network. With that, the proposed solution using a virtual MSISDN (vMSISDN) and/or a virtual IMSI (vIMSI) advantageously allows the usage of other wireless or wired technologies, for example Bluetooth or Ethernet, for accessing the mobile packet core network with a mobile device. A further preferred embodiment of the present invention suggest the usage of a Wi-Fi- or IP-webcam as a mobile device without a SIM/USIM (also called SIM-less device or USIM-less device). The Wi-Fi- or IP-webcam gets a vMSISDN and/or a vIMSI and can then use services of the mobile packet core network. For example in case of a movement in the area of the Wi-Fi- or IP-webcam for signaling the movement or the like.

The database (DB) is advantageously designed to store the relation between MSISDN respectively vMSISDN, IMSI respectively vIMSI and the created respectively generated certificate. In a further embodiment of the present invention the database (DB) gets requests from the entity of the mobile packet core network, preferably the VPN Server or a TTG (TTG: Tunnel Terminating Gateway) or an ePDG (ePDG: evolved Packed Data Gateway), to identify the MSISDN respectively vMSISDN and/or IMSI respectively vIMSI for a specific user identified by the specific user certificate or credentials. For the usage of TTG or ePDG it is advantageously supposed to use a TTG client or ePDG client on a Wi-Fi only device. With that the solution according to the present invention could be independent from the VPN client.

The present invention further suggests that the entity (VPN Server, TTG node ePDG node) of the mobile packet core network passes the retrieved certificate or credentials to the database to retrieve the MSISDN respectively vMSISDN and/or IMSI respectively vIMSI for authentication of the user towards the authentication entity (AAA) of the mobile packet core network, which uses the MSISDN respectively vMSISDN and/or IMSI respectively vIMSI for triggering a usage of a service of the mobile packet core network.

In another embodiment of the present invention an entity, preferably an ANDSF Server, of the communication system creates respectively generates the certificate or credentials preferably as a user specific certificate out of the MSISDN respectively the vMSISDN and/or the IMSI respectively vIMSI allocated to the user of the mobile device and stores at least the created certificate or credentials in a database of the communication system, preferably together with the MSISDN respectively the vMSISDN and/or the IMSI respectively vIMSI allocated to the user of the mobile device. A further embodiment is characterized in that the entity (e.g. ANDSF Server) of the communication system sends the certificate or credentials to the mobile device, preferably to the application (ANDSF application) running on side of the mobile device for determining the trustworthiness of the wireless radio access network, and stores the certificate by the mobile device, preferably within the application (e.g. VPN application) running on side of the mobile device for establishing the secure tunnel connection. In case of an application supporting e.g. TTG or ePDG it is supposed that on a no classic mobile radio access capability device (e.g. Wi-Fi only device) the ANDSF Server could send the required credentials to establish a secure connection towards the mobile packet core network to the application.

Advantageously the certificate or credentials (required credentials) are stored securely within the mobile device without any access by the user or other applications without approved once from the operator.

A further preferred embodiment of the present invention is characterized in that a provisioning system of the mobile packet core network generates a virtual MSISDN (vMSISDN) and/or a virtual IMSI (vIMSI) if the mobile device does not have a SIM (SIM: Subscriber Identity module) respectively USIM (Universal SIM) and/or if the mobile device can access the communication system only via a wireless radio access network (Wi-Fi), preferably is a wireless-radio-accessnetwork-only (Wi-Fi-only) device, and reports the generated virtual MSISDN (vMSISDN) and/or a virtual IMSI (vIMSI) to the entity (preferably an ANDSF Server) of the communication system creating the certificate.

As technical solution of the initially mentioned problems an unclaimed aspect furthermore proposes an entity, preferably a VPN Server, of a mobile packet core network of a communication system comprising a mobile device, a core network, the mobile packet core network and a wireless radio access network (Wi-Fi), to which the mobile device can establish a secure tunnel connection, the entity (e.g. VPN Server) comprising means for receiving a certificate or credentials from the mobile device, which certificate is stored within the mobile device as credential, means for retrieving a MSISDN respectively a virtual MSISDN (vMSISDN) and/or an IMSI respectively a virtual IMSI (vIMSI) allocated to a user of the mobile device out of a database of the communication system by use of the received certificate, and means for passing the retrieved MSISDN respectively virtual MSISDN (vMSISDN) and/or IMSI virtual IMSI (vIMSI) to an authentication entity (AAA) of the mobile packet core network for triggering a usage of a service of the mobile packet core network with the mobile device.

The activities of the entity (VPN server) finish after authentication of the certificate or credentials. Then the user of the mobile device has access to the 1 P network behind the entity (VPN server). Preferably the entity (VPN server) has to request the MSISDN respectively vMSISDN and/or IMSI respectively vIMSI from the database of the communication system based on the certificate or credentials send from the mobile device. After that the entity (VPN server) preferably sends an authentication request to the authentication entity, preferably an AAA server with the MSISDN respectively vMSISDN and/or the IMSI respectively vIMSI. If the HLR/HSS via the AAA confirms that this is a customer of the MNO it gives access to the WLAN Proxy, e.g. the TWG or the equivalent function in UMTS networks, which then starts the standard process, especially for connecting to the internet.

The entity (e.g. VPN Server) is advantageously designed to be employed in a method according to the present invention.

As technical solution of the initially mentioned problems an unclaimed aspect furthermore proposes a mobile device in a communication system comprising the mobile device, a core network, a mobile packet core network and a wireless radio access network (Wi-Fi), the mobile device comprising means for accessing the wireless radio access network (Wi-Fi), and further comprising means for determining whether the wireless radio access network (Wi-Fi) is a trustworthy wireless radio access network (Wi-Fi), and means for establishing a secure tunnel connection to an entity (e.g. VPN Server) of the mobile packet core network for triggering a usage of a service of the mobile packet core network by an authentication entity (AAA) of the mobile packet core network by using a certificate or credentials stored within the mobile device as credential towards the entity (e.g. VPN Server) at least if the wireless radio access network (Wi-Fi) is not trustworthy.

The mobile device is advantageously designed to be employed in a method according to the present invention.

As technical solution of the initially mentioned problems an unclaimed aspect furthermore proposes an entity, preferably an ANDSF Server, of a communication system comprising a mobile device, a core network, a mobile packet core network and a wireless radio access network (Wi-Fi), the entity (ANDSF Server) comprising means for creating a certificate or credentials, preferably as a user specific certificate, out of a MSISDN respectively a virtual MSISDN (vMSISDN) and/or an IMSI respectively a virtual IMSI (vIMSI) allocated to the user of the mobile device and means for storing at least the created certificate or credentials in a database of the communication system, preferably together with the MSISDN respectively the virtual MSISDN (vMSISDN) and/or the IMSI respectively the virtual IMSI (vIMSI) allocated to the user of the mobile device.

In a further embodiment the entity (preferably an ANDSF Server) further comprises means for sending the certificate or credentials to the mobile device, preferably to an application (ANDSF application) running on side of the mobile device for determining the trustworthiness of the wireless radio access network (Wi-Fi), and means for storing the certificate or credentials by the mobile device, preferably within an application (VPN application) running on side of the mobile device for establishing a secure tunnel connection.

The entity (ANDSF Server) is preferably designed as a node respectively function in the core network. The entity (ANDSF server) preferably creates respectively generates a user specific certificate or credentials when getting MSISDN respectively vMSISDN and/or IMSI respectively vIMSI for example from a provisioning system respectively provisioning tool. Further the entity (ANDSF server) preferably is extended with a specific database (DB) to store the certificate or credentials and MSISDN respectively vMSISDN, IMSI respectively vIMSI relation. Furthermore the entity (ANDSF server) is advantageously able to send the user specific certificate to the mobile device.

The entity (ANDSF Server) is advantageously designed to be employed in a method according to the present invention.

As technical solution of the initially mentioned problems an unclaimed aspect furthermore proposes a provisioning system respectively provisioning tool of a mobile packet core network of a communication system comprising a mobile device, a core network, the mobile packet core network and a wireless radio access network (Wi-Fi), characterized in that the provisioning system of the mobile packet core network comprising means for generating a virtual MSISDN (vMSISDN) and/or a virtual IMSI (vIMSI) if the mobile device does not have a SIM respectively USIM and/or if the mobile device can access the communication system only via a wireless radio access network (Wi-Fi), preferably is a wireless-radio-access-network-only (Wi-Fi-only) device, and reports the generated virtual MSISDN (vMSISDN) and/or a virtual IMSI (vIMSI) to an entity (ANDSF Server) of the communication system creating a user specific certificate or credentials related to the MSISDN respectively vMSISDN and/or IMSI respectively vIMSI.

Advantageously the provisioning system respectively provisioning tool provides an interface to send user information, preferably MSISDN respectively vMSISDN and/or IMSI respectively vIMSI, to the e.g. ANDSF server. In a preferred embodiment the provisioning system respectively provisioning tool creates respectively generates a virtual MSISDN (vMSISDN) and/or a virtual IMSI (vIMSI) for devices without SIM respectively USIM, for example a WLAN-only tablet or the like.

The provisioning system respectively provisioning tool is advantageously designed to be employed in a method according to the present invention.

Other details, characteristics and advantages of the invention will be explained in detail in the following by means of the exemplary embodiments represented in the figures of the drawings. Herein:
- Fig. 1: is a schematic diagram of entities of a communications system used in a first embodiment according to the present invention for using a wireless radio access network, especially Wi-Fi, as access towards the mobile packet core network for using services of the mobile packet core network;
- Fig. 2: is an information flow of an example for using a wireless radio access network, especially Wi-Fi, as access towards the mobile packet core network for using services of the mobile packet core network according to the present invention with the communications system according to Fig. 1;
- Fig. 3: is a schematic diagram of entities of a communications system used in a second embodiment according to the present invention for using a wireless radio access network, especially Wi-Fi, as access towards the mobile packet core network for using services of the mobile packet core network; and
- Fig. 4: is an information flow of an example for using a wireless radio access network, especially Wi-Fi, as access towards the mobile packet core network for using services of the mobile packet core network according to the present invention with the communications system according to Fig. 3.

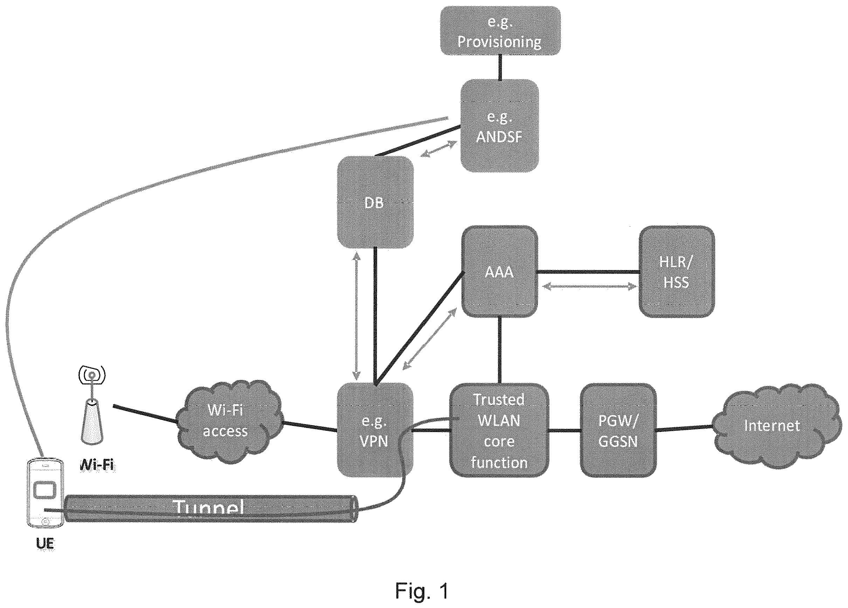

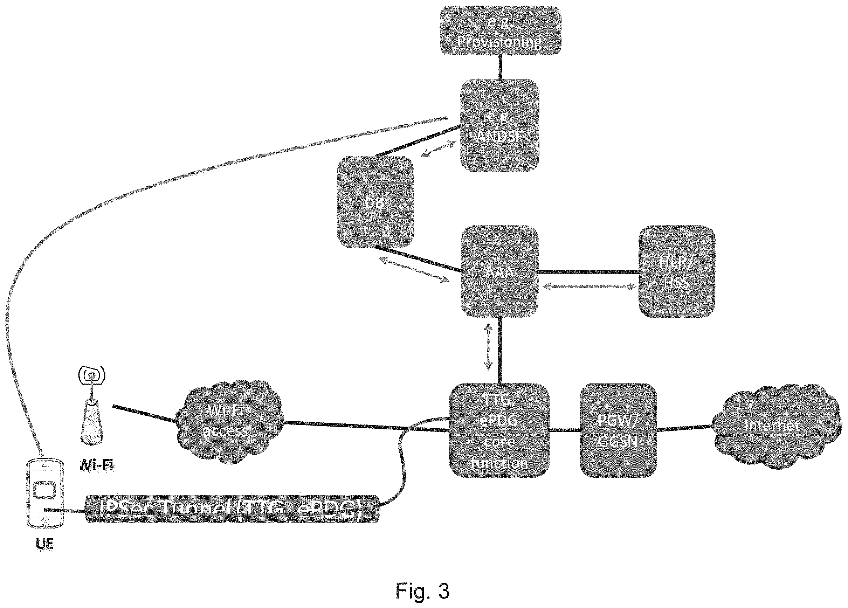

In the Fig. 1 to Fig. 4 only those entities of the communication system which are being used for the method according to the present invention and which play a major role in carrying out the method according to the present invention are depicted. Further entities will be present and may be used. As the communication in such a communication system is known these additional entities are not specifically shown or mentioned. In addition, for sake of clarity, only one mobile device UE is shown in the figures, it is, however, obvious that several mobile devices UE may be part of the communication network.

A user of a mobile device UE is customer respectively subscriber of services, especially core services, offered by a MNO in a mobile packet core network, in particular a 2G, 3G and/or LTE network. The mobile device UE can access a wireless radio access network, in particular a Wi-Fi network with its Wi-Fi access points. For using such core services of a mobile packet core network of an MNO, in particular for an e.g. secure internet access, especially via an e.g. virus scanner or anti-malware, the customer has to book such services. In particular the user of the mobile device UE books such core service and wishes to use these core services also via the wireless radio access network, in particular the Wi-Fi network, irrespective of whether or not the wireless radio access network is a trusted or untrusted wireless radio access network. Such booking of services of the MNO is done in advance the method according to the present invention via a e.g. provisioning system respectively provisioning tool or a GUI (GUI: Graphical User Interface) provided by the mobile packet core network of the MNO. The provisioning system respectively provisioning tool reports the MSISDN and/or IMSI of the customer respectively subscriber to an entity of the communication system, presently to an ANDSF server. If the customer respectively subscriber does not have or use a SIM or a USIM, the provisioning system respectively tool will generate a virtual MSISDN and/or a virtual IMSI, especially, when the customer respectively subscriber uses a Wi-Fi-only device or a SIM-less/USIM-less device.

In case no TTG or ePDG support to the mobile device and in the mobile packet core network the entity (ANDSF Server) creates respectively generates a user specific certificate and associates it with the given MSISDN/IMSI respectively vMSISDN/vlMSI and stores all tine information in a database DB for further use.

For using an untrusted wireless radio access network, especially Wi-Fi, as access towards the mobile packet core network for using services of the mobile packet core network the user downloads an ANDSF application and a VPN application to his mobile device, for example from a corresponding app store or the like, and registers the applications towards the MNO network.

The ANDSF Server sends the user specific certificate to the downloaded ANDSF application on the mobile device. The ANDSF application then stores the user specific certificate preferably securely in the VPN client.

With that the provisioning for using a wireless radio access network, especially Wi-Fi, as access towards the mobile packet core network for using services of the mobile packet core network according to the present invention is finished respectively completed.

The user then, especially later, starts a session in a wireless radio access network, especially a Wi-Fi session, in an untrusted environment for example in a coffee shop or the like. The user respectively the mobile device of the user registers to the untrusted wireless radio access network (untrusted Wi-Fi) for example via a portal, for example with an user name and a password he got from the owner or operator of the wireless radio access network Wi-Fi. With that the mobile device UE receives an identifier respectively identification used to signal the wireless radio access network Wi-Fi to the mobile device (UE) with an identifier respectively identification of a wireless radio access network Wi-Fi stored in a list within the mobile device (UE), especially the ANDSF application. Presently the SSID of the Wi-Fi is used as identifier respectively identification. When the SSID of the wireless radio access network (untrusted Wi-Fi) is not part of the trusted SSID lists stored in the ANDSF application the ANDSF application on the mobile device UE starts the VPN application on the mobile device UE. The VPN application running on side of the mobile device UE then establishes a secure tunnel using the user specific certificate as credential towards a VPN server of the mobile packet core network.

The VPN Server of the mobile packet core network will use the user specific certificate to retrieve the user's MSISDN/IMSI respectively vMSISDN/vlMSI from the database DB of the communication system. The VPN server then passes the user's MSISDN/IMSI respectively vMSISDN/vlMSI to an authentication entity, for example an AAA server (AAA: authentication, authorization and accounting) of the mobile packet core network, which will trigger the authentication request to the HLR/HSS. If the HLR/HSS confirms then the AAA server will trigger the 3GPP connection. The remain of the flow then is standard.

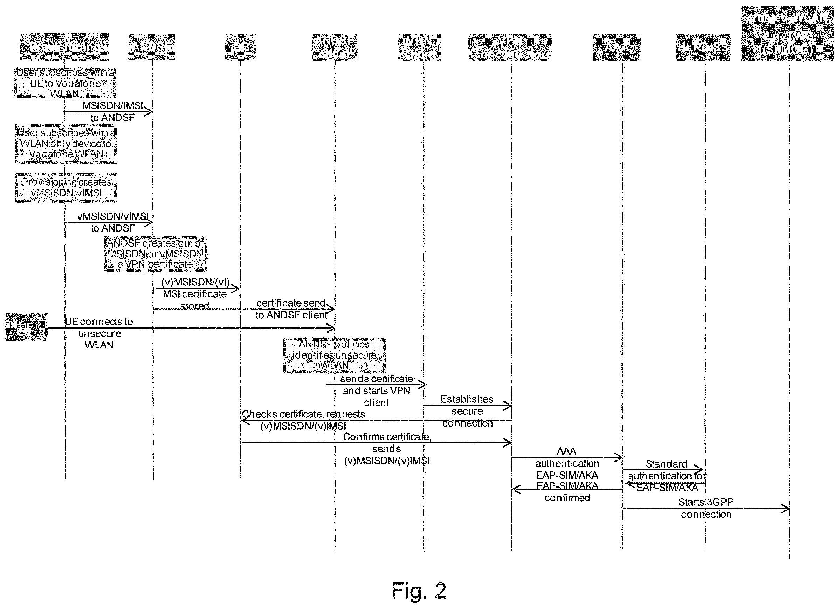

The information flow of the method according to the present invention comprises according to Fig. 2 the following steps:
a) User/subscriber subscribes to service via provisioning system;
b) provisioning system will pass MSISDN/IMSI information to ANDSF. If user/subscriber does not have a SIM/USIM, provisioning system will generate a virtual vMSISDN/vIMSI;
c) ANDSF generates certificate and stores the pair of certificate and MSISDN/IMSI or vMSISDN/vlMSI in a database DB of the communication system;
d) user/subscriber install ANDSF client and retrieves it's certificate and ANDSF policies;
e) when user/subscriber is in a Wi-Fi network not considered trusted, the mobile device UE of the user/subscriber will establish a secure VPN connection to the VPN concentrator using the certificate as credential;
f) the VPN concentrator will use the certificate to retrieve the user's MSISDN/IMSI respectively vMSISDN/vIMSI;
g) the VPN concentrator passes this information to AAA;
h) AAA will confirm user/subscriber via a standard request to the HLR/HSS;
i) the AAA server will trigger the 3GPP connection;
j) remain of the flow is standard.

In case TTG or ePDG will be support on the mobile device (which is not supporting classic mobile radio access capability but only e.g. Wi-Fi) and in the mobile packet core. In this case the entity (e.g. ANDSF Server) creates respectively generates user specific credentials and associates it with the given vMSISDN/vlMSI and stores all tine information in a database DB for further use. Note that the device does not have SIM/USIM capabilities in this case.

The server sends the user specific credentials to the downloaded application e.g. ANDSF on the mobile device. The ANDSF application then stores the user specific credentials preferably securely in the TTG or ePDG client.

With that the provisioning for using a wireless radio access network, especially Wi-Fi, as access towards the mobile packet core network for using services of the mobile packet core network according to the present invention is finished respectively completed.

The user then, especially later, starts a session in a wireless radio access network, especially a Wi-Fi session, in an untrusted environment for example in a coffee shop or the like. The user respectively the mobile device (e.g. Wi-Fi only) of the user registers to the untrusted wireless radio access network (untrusted Wi-Fi) for example via a portal, for example with an user name and a password he got from the owner or operator of the wireless radio access network Wi-Fi. With that the mobile device UE receives an identifier respectively identification used to signal the wireless radio access network Wi-Fi to the mobile device (UE) with an identifier respectively identification of a wireless radio access network Wi-Fi stored in a list within the mobile device (UE), especially the ANDSF application.

Presently the SSID of the Wi-Fi could be used as identifier respectively identification. When the SSID of the wireless radio access network (untrusted Wi-Fi) is not part of the trusted SSID lists stored in the ANDSF application the ANDSF application on the mobile device UE starts the TTG or ePDG application on the mobile device (e.g. Wi-Fi only). The TTG or ePDG application running on side of the mobile device then establishes a secure tunnel using the user specific credentials towards a TTG or ePDG server of the mobile packet core network.

The TTG or ePDG Server of the mobile packet core network will use the user specific credentials to retrieve the user's vMSISDN/vlMSI from the database DB of the communication system. The TTG or ePDG server then passes the user's vMSISDN/vlMSI to an authentication entity AAA (AAA: authentication, authorization and accounting), for example an AAA Server of the mobile packet core network, which will trigger the authentication request to the HLR/HSS. If HLR/HSS confirms then AAA server passes the confirmation to the TTG or ePDG server which initiates the 3GPP connection. The remain of the flow then is standard.

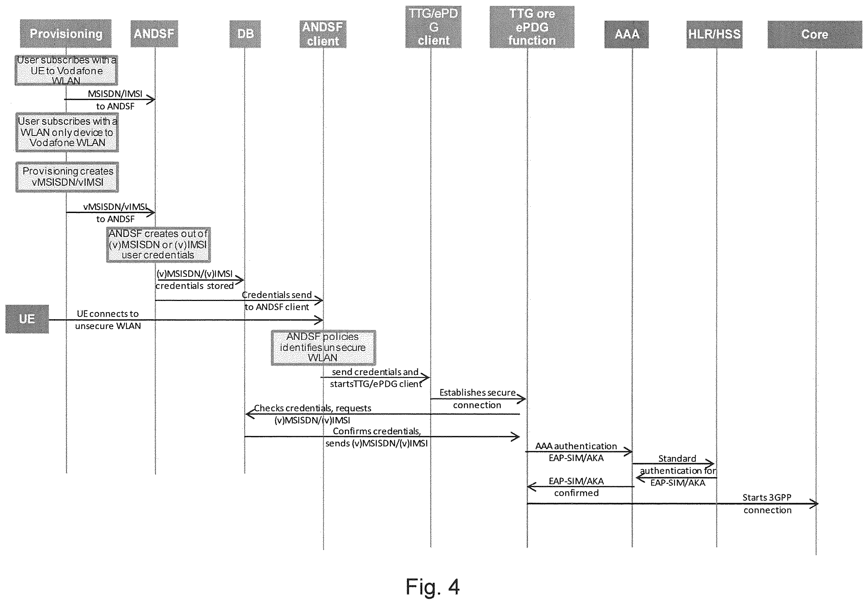

The information flow of the method according to the present invention comprises according to Fig. 4 the following steps:
a) User/subscriber subscribes to service via provisioning system;
b) provisioning system will pass MSISDN/IMSI information to ANDSF. If subscriber does not have a SIM/USIM card, provisioning system will generate a virtual vMSISDN/vIMSI;
c) ANDSF or related systems generates credentials and stores the pair credentials and MSISDN/IMSI respectively vMSISDN/vlMSI in a database DB;
d) user/subscriber install ANDSF client and retrieves it's credentials and ANDSF policies;
e) when user is in a Wi-Fi network not considered trusted, the device will establish a secure tunnel connection to the TTG/ePDG function using the credentials;
f) TTG/ePDG function will use the credentials to retrieve user's MSISDN/IMSI respectively vMSISDN/vIMSI;
g) TTG/ePDG function passes this information to AAA;
h) AAA will confirm user/subscriber via a standard request to the HLR/HSS;
i) TTG/ePDG function will trigger the 3GPP connection;
j) remain of the flow is standard

The exemplary embodiments of the invention represented in the figures of the drawings and described in connection with these one only serve for explaining the invention and are not limiting for this one.

### List of reference numerals:

- UE/MS: mobile device (mobile phone, smart phone, tablet or any other mobile communication terminal capable of connecting to a wireless radio access network)
- Wi-Fi: wireless radio access network
- VPN: Virtual Private Network
- AAA: Authentication, Authorization and Accounting

## Claims

1. Method for using services of a mobile packet core network in a communication system comprising a mobile device (UE), a core network, the mobile packet core network and a wireless radio access network (Wi-Fi), whereby the mobile device (UE) accesses the mobile packet core network via the wireless radio access network (Wi-Fi),
wherein the mobile device (UE), during setup of a connection of the mobile device (UE) to the wireless radio access network (Wi-Fi),
determines whether the wireless radio access network (Wi-Fi) is a trustworthy wireless radio access network (Wi-Fi), and
at least if the wireless radio access network (Wi-Fi) is not trustworthy, establishes a secure tunnel connection to a network entity of the mobile packet core network, wherein the network entity is a Virtual Private Network (VPN) Server, a Tunnel Terminating Gateway (TTG) or an evolved Packed Data Gateway (ePDG), for triggering a usage of a service of the mobile packet core network by an authentication entity (AAA) of the mobile packet core network by using a certificate or credentials stored within the mobile device (UE) as credential towards the network entity,
wherein the network entity of the mobile packet core network to which the mobile device (UE) establishes the secure tunnel connection uses the certificate or credentials stored within the mobile device (UE) to retrieve a MSISDN (MSISDN: Mobile Subscriber Integrated Services Digital Network) respectively a virtual MSISDN (vMSISDN) and/or an IMSI (IMSI: International Mobile Subscriber Identity) respectively a virtual IMSI (vIMSI) allocated to the user of the mobile device (UE) out of a database (DB) of the communication system, and
passes the retrieved MSISDN respectively virtual MSISDN (vMSISDN) and/or IMSI respectively virtual IMSI (vIMSI) to the authentication entity (AAA) of the mobile packet core network, which uses the MSISDN respectively virtual MSISDN (vMSISDN) and/or IMSI respectively virtual IMSI (vIMSI) for triggering a usage of a service of the mobile packet core network.

2. Method according to claim 1, **characterized in that** the determination of the trustworthiness of the wireless radio access network (Wi-Fi) on side of the mobile device (UE) comprises a comparison of an identifier respectively identification used to signal the wireless radio access network (Wi-Fi) to the mobile device (UE) with an identifier respectively identification of a wireless radio access network (Wi-Fi) stored in a list within the mobile device (UE).

3. Method according to claim 2, **characterized in that** the identifier respectively identification signaled to the mobile device (UE) is the SSID (SSID: Service Set Identifier) of the wireless radio access network (Wi-Fi) and the identifier respectively identification stored in the list within the mobile device (UE) is a SSID of a wireless radio access network (Wi-Fi).

4. Method according to claim 2 or claim 3, **characterized in that** the trustworthiness of the wireless radio access network (Wi-Fi) is determined by an application (ANDSF application) running on side of the mobile device (UE).

5. Method according to one of the claims 1 to 4, **characterized in that** the secure tunnel connection to the network entity of the mobile packet core network is established by an application (VPN application or TTG, ePDG application) running on side of the mobile device (UE).

6. Method according to claim 5, **characterized in that** the application (VPN application) establishing the secure tunnel connection to the network entity of the mobile packet core network is started by the application (ANDSF application) determining the trustworthiness of the wireless radio access network (Wi-Fi), if the wireless radio access network (Wi-Fi) is not trustworthy.

7. Method according to one of the claims 4 to 6, **characterized in that** the application (ANDSF application) determining the trustworthiness of the wireless radio access network (Wi-Fi) and the application (VPN application) establishing the secure tunnel connection to the network entity of the mobile packet core network are combined in a single application running on side of the mobile device (UE).

8. Method according to one of the claims 1 to 7, **characterized in that** an Access Network Discovery and Selection Function (ANDSF) Server of the communication system creates the certificate or the credentials out of the MSISDN respectively the virtual MSISDN (vMSISDN) and/or the IMSI respectively the virtual IMSI (vIMSI) allocated to the user of the mobile device (UE) and stores at least the created certificate or credentials in a database (DB) of the communication system.

9. Method according to claim 8, **characterized in that** the ANDSF Server of the communication system sends the certificate or credentials to the mobile device (UE) and **in that** the mobile device (UE) stores the certificate respectively credentials within the mobile device (UE).

10. Method according to one of the claims 1 to 9, **characterized in that** the certificate or credentials are stored securely within the mobile device (UE).

11. Method according to one of the claims 1 to 10, **characterized in that** a provisioning system of the mobile packet core network generates a virtual MSISDN (vMSISDN) and/or a virtual IMSI (vIMSI) if the mobile device (UE) does not have a SIM (SIM: Subscriber Identity module) respectively USIM (Universal SIM), and reports the generated virtual MSISDN (vMSISDN) and/or a virtual IMSI (vIMSI) to the ANDSF Server of the communication system creating the certificate or credentials.

12. System for using services of a mobile packet core network in a communication system comprising, a core network, the mobile packet core network and a wireless radio access network (Wi-Fi), said system comprising
a mobile device (UE) comprising
means for accessing the mobile packet core network via the wireless radio access network (Wi-Fi),
means for determining, during setup of a connection of the mobile device (UE) to the wireless radio access network (Wi-Fi), whether the wireless radio access network (Wi-Fi) is a trustworthy wireless radio access network (Wi-Fi), and
means for establishing a secure tunnel connection to an entity (VPN Server) of the mobile packet core network for triggering a usage of a service of the mobile packet core network by an authentication entity (AAA) of the mobile packet core network by using a certificate or credentials stored within the mobile device (UE) as credential towards the entity (VPN Server) at least if the wireless radio access network (Wi-Fi) is not trustworthy, and
the network entity to which the mobile device (UE) establishes the secure tunnel connection, wherein the network entity is a Virtual Private Network (VPN) Server, a Tunnel Terminating Gateway (TTG) or an evolved Packed Data Gateway (ePDG), the network entity comprising
means for receiving, from the mobile device (UE), a certificate or credentials,
means for retrieving a MSISDN respectively a virtual MSISDN (vMSISDN) and/or an IMSI respectively a virtual IMSI (vIMSI) allocated to a user of the mobile device (UE) out of a database (DB) of the communication system by use of the received certificate or credentials, and
means for passing the retrieved MSISDN respectively virtual MSISDN (vMSISDN) and/or IMSI respectively virtual IMSI (vIMSI) to an authentication entity (AAA) of the mobile packet core network for triggering a usage of a service of the mobile packet core network with the mobile device (UE).

## Patentansprüche

1. Verfahren zur Nutzung von Diensten eines mobilen Paketkernnetzes in einem Kommunikationssystem mit einem mobilen Gerät (UE), einem Kernnetz, dem mobilen Paketkernnetz und einem drahtlosen Funkzugangsnetz (Wi-Fi), wobei das mobile Gerät (UE) über das drahtlose Funkzugangsnetz (Wi-Fi) auf das mobile Paketkernnetz zugreift,
wobei das mobile Gerät (UE) während des Aufbaus einer Verbindung des mobilen Geräts (UE) mit dem drahtlosen Funkzugangsnetzwerk (Wi-Fi)
bestimmt, ob das drahtlose Funkzugangsnetzwerk (Wi-Fi) ein vertrauenswürdiges drahtloses Funkzugangsnetzwerk (Wi-Fi) ist, und zumindest dann, wenn das drahtlose Funkzugangsnetzwerk (Wi-Fi) nicht vertrauenswürdig ist, eine sichere Tunnelverbindung zu einer Netzinstanz des mobilen Paketkernnetzes aufbaut, wobei die Netzinstanz ein Virtual Private Network (VPN)-Server, ein Tunnel Terminating Gateway (TTG) oder ein Evolved Packed Data Gateway (ePDG) ist, um eine Nutzung eines Dienstes des mobilen Paketkernnetzes durch eine Authentifizierungsinstanz (AAA) des mobilen Paketkernnetzes auszulösen unter Verwendung von in dem mobilen Gerät (UE) gespeicherten Zertifikat oder Anmeldeinformationen als Anmeldeinformationen gegenüber der Netzinstanz,
wobei die Netzinstanz des mobilen Paketkernnetzes, zu der das mobile Gerät (UE) die sichere Tunnelverbindung herstellt,
das Zertifikat oder die Anmeldeinformationen, die in dem mobilen Gerät (UE) gespeichert sind, verwendet, um eine MSISDN (MSISDN: Mobile Subscriber Integrated Services Digital Network) bzw. eine virtuelle MSISDN (vMSISDN) und/oder eine IMSI (IMSI: International Mobile Subscriber Identity) bzw. eine virtuelle IMSI (vIMSI), die dem Benutzer des mobilen Geräts (UE) zugeordnet ist, aus einer Datenbank (DB) des Kommunikationssystems abzurufen, und
die abgerufene MSISDN bzw. virtuelle MSISDN (vMSISDN) und/oder IMSI bzw. virtuelle IMSI (vIMSI) an die Authentifizierungsinstanz (AAA) des mobilen Paketkernnetzes, die die MSISDN bzw. virtuelle MSISDN (VMSISDN) und/oder IMSI bzw. virtuelle IMSI (vIMSI) zum Auslösen einer Nutzung eines Dienstes des mobilen Paketkernnetzes verwendet, weiterleitet.

2. Verfahren nach Anspruch 1, **dadurch gekennzeichnet, dass** die Bestimmung der Vertrauenswürdigkeit des drahtlosen Funkzugangsnetzes (Wi-Fi) auf Seiten des mobilen Geräts (UE) einen Vergleich einer Kennung bzw. Identifikation, die verwendet wird, um dem mobilen Gerät (UE) das drahtlose Funkzugangsnetz (Wi-Fi) zu signalisieren, mit einer Kennung bzw. Identifikation eines drahtlosen Funkzugangsnetzes (Wi-Fi), die in einer Liste innerhalb des mobilen Geräts (UE) gespeichert ist, umfasst.

3. Verfahren nach Anspruch 2, **dadurch gekennzeichnet, dass** die dem mobilen Gerät (UE) signalisierte Kennung bzw. Identifikation die SSID (SSID: Service Set Identifier) des drahtlosen Funkzugangsnetzes (Wi-Fi) ist und die in der Liste im mobilen Gerät (UE) gespeicherte Kennung bzw. Identifikation eine SSID eines drahtlosen Funkzugangsnetzes (Wi-Fi) ist.

4. Verfahren nach Anspruch 2 oder Anspruch 3, **dadurch gekennzeichnet, dass** die Vertrauenswürdigkeit des drahtlosen Funkzugangsnetzes (Wi-Fi) durch eine Anwendung (ANDSF-Anwendung) bestimmt wird, die auf der Seite des mobilen Geräts (UE) läuft.

5. Verfahren nach einem der Ansprüche 1 bis 4, **dadurch gekennzeichnet, dass** die sichere Tunnelverbindung zur Netzinstanz des mobilen Paketkernnetzes durch eine Anwendung (VPN-Anwendung oder TTG, ePDG-Anwendung) aufgebaut wird, die auf der Seite des mobilen Gerätes (UE) läuft.

6. Verfahren nach Anspruch 5, **dadurch gekennzeichnet, dass** die Anwendung (VPN-Anwendung), die die sichere Tunnelverbindung zur Netzinstanz des mobilen Paketkernnetzes aufbaut, durch die Anwendung (ANDSF-Anwendung) gestartet wird, die die Vertrauenswürdigkeit des drahtlosen Funkzugangsnetzes (Wi-Fi) ermittelt, falls das drahtlose Funkzugangsnetz (Wi-Fi) nicht vertrauenswürdig ist.

7. Verfahren nach einem der Ansprüche 4 bis 6, **dadurch gekennzeichnet, dass** die Anwendung (ANDSF-Anwendung), die die Vertrauenswürdigkeit des drahtlosen Funkzugangsnetzes (Wi-Fi) feststellt, und die Anwendung (VPN-Anwendung), die die sichere Tunnelverbindung zur Netzinstanz des mobilen Paketkernnetzes herstellt, in einer einzigen Anwendung kombiniert werden, die auf der Seite des mobilen Gerätes (UE) läuft.

8. Verfahren nach einem der Ansprüche 1 bis 7, **dadurch gekennzeichnet, dass** ein Access Network Discovery and Selection Function (ANDSF) Server des Kommunikationssystems das Zertifikat oder die Anmeldeinformationen aus der MSISDN bzw. der virtuellen MSISDN (vMSISDN) und/oder der IMSI bzw. der virtuellen IMSI (vIMSI), die dem Benutzer des mobilen Endgerätes (UE) zugeordnet sind, erstellt und zumindest das erstellte Zertifikat oder die Anmeldeinformationen in einer Datenbank (DB) des Kommunikationssystems speichert.

9. Verfahren nach Anspruch 8, **dadurch gekennzeichnet, dass** der ANDSF-Server des Kommunikationssystems das Zertifikat oder die Anmeldeinformationen an das mobile Gerät (UE) sendet und dass das mobile Gerät (UE) das Zertifikat bzw. die Anmeldeinformationen im mobilen Gerät (UE) speichert.

10. Verfahren nach einem der Ansprüche 1 bis 9, **dadurch gekennzeichnet, dass** das Zertifikat oder die Anmeldeinformationen sicher in dem mobilen Gerät (UE) gespeichert sind.

11. Verfahren nach einem der Ansprüche 1 bis 10, **dadurch gekennzeichnet, dass** ein Provisionierungssystem des mobilen Paketkernnetzes eine virtuelle MSISDN (vMSISDN) und/oder eine virtuelle IMSI (vIMSI) erzeugt, falls das mobile Endgerät (UE) keine SIM (SIM: Subscriber Identity Module) bzw. USIM (Universal SIM) besitzt, und die erzeugte virtuelle MSISDN (vMSISDN) und/oder virtuelle IMSI (vIMSI) an den ANDSF-Server des Kommunikationssystems meldet, der das Zertifikat oder die Anmeldeinformationen erstellt.

12. System zur Nutzung von Diensten eines mobilen Paketkernnetzes in einem Kommunikationssystem mit einem Kernnetz, dem mobilen Paketkernnetz und einem drahtlosen Funkzugangsnetz (Wi-Fi), wobei das System folgendes umfasst
ein mobiles Gerät (UE) mit
Mitteln zum Zugriff auf das mobile Paketkernnetz über das drahtlose Funkzugangsnetz (Wi-Fi),
Mitteln zum Bestimmen, während des Aufbaus einer Verbindung des mobilen Geräts (UE) mit dem drahtlosen Funkzugangsnetz (Wi-Fi), ob das drahtlose Funkzugangsnetz (Wi-Fi) ein vertrauenswürdiges drahtloses Funkzugangsnetz (Wi-Fi) ist, und
Mitteln zum Herstellen einer sicheren Tunnelverbindung zu einer Entität (VPN Server) des mobilen Paketkernnetzes zum Auslösen einer Nutzung eines Dienstes des mobilen Paketkernnetzes durch eine Authentifizierungsentität (AAA) des mobilen Paketkernnetzes unter Verwendung eines Zertifikats oder von Anmeldeinformationen, die in der mobilen Vorrichtung (UE) gespeichert sind, als Anmeldeinformationen gegenüber der Entität (VPN Server), zumindest wenn das drahtlose Funkzugangsnetz (Wi-Fi) nicht vertrauenswürdig ist, und
die Netzinstanz, zu der das mobile Gerät (UE) die sichere Tunnelverbindung herstellt, wobei die Netzinstanz ein Virtual Private Network (VPN)-Server, ein Tunnel Terminating Gateway (TTG) oder ein Evolved Packed Data Gateway (ePDG) ist, wobei die Netzinstanz
Mittel zum Empfangen eines Zertifikats oder von Anmeldeinformationen von dem mobilen Gerät (UE),
Mittel zum Abrufen einer MSISDN bzw. einer virtuellen MSISDN (vMSISDN) und/oder einer IMSI bzw. einer virtuellen IMSI (vIMSI), die einem Benutzer des mobilen Geräts (UE) aus einer Datenbank (DB) des Kommunikationssystems unter Verwendung des empfangenen Zertifikats oder der Anmeldeinformationen zugewiesen sind, und
Mittel zum Weiterleiten der abgerufenen MSISDN bzw. virtuellen MSISDN (vMSISDN) und/oder IMSI bzw. virtuellen IMSI (vIMSI) an eine Authentifizierungsinstanz (AAA) des mobilen Paketkernnetzes zum Auslösen einer Nutzung eines Dienstes des mobilen Paketkernnetzes mit dem mobilen Gerät (UE)
umfasst.

## Revendications

1. Procédé d'utilisation de services d'un réseau central de paquets mobiles dans un système de communication comprenant un dispositif mobile (UE), un réseau central, le réseau central de paquets mobiles et un réseau d'accès radio sans fil (Wi-Fi), selon lequel le dispositif mobile (UE) accède au réseau central de paquets mobiles via le réseau d'accès radio sans fil (Wi-Fi),
dans lequel le dispositif mobile (UE), lors de l'établissement d'une connexion du dispositif mobile (UE) au réseau d'accès radio sans fil (Wi-Fi),
détermine si le réseau d'accès radio sans fil (Wi-Fi) est un réseau d'accès radio sans fil (Wi-Fi) fiable, et
au moins si le réseau d'accès radio sans fil (Wi-Fi) n'est pas fiable, établit une connexion tunnel sécurisée à une entité réseau du réseau central de paquets mobiles, dans lequel l'entité réseau est un Serveur de Réseau Privé Virtuel (VPN), une Passerelle de Terminaison de Tunnel (TTG) ou une Passerelle de Données par Paquets évoluée (ePDG), pour déclencher une utilisation d'un service du réseau central de paquets mobiles par une entité d'authentification (AAA) du réseau central de paquets mobiles en utilisant un certificat ou des accréditations stockés dans le dispositif mobile (UE) comme accréditation vers l'entité réseau,
dans lequel l'entité réseau du réseau central de paquets mobiles auquel le dispositif mobile (UE) établit la connexion tunnel sécurisée
utilise le certificat ou les accréditations stockés dans le dispositif mobile (UE) pour récupérer un MSISDN (MSISDN : Réseau Numérique à Services Intégrés d'Abonné Mobile) respectivement un MSISDN virtuel (vMSISDN) et/ou une IMSI (IMSI : Identité Internationale d'Abonné Mobile) respectivement une IMSI virtuelle (vIMSI) attribuée à l'utilisateur du dispositif mobile (UE) à partir d'une base de données (DB) du système de communication, et
transmet le MSISDN respectivement MSISDN virtuel (vMSISDN) et/ou la IMSI respectivement IMSI virtuelle (vIMSI) récupérés à l'entité d'authentification (AAA) du réseau central de paquets mobiles, qui utilise le MSISDN respectivement MSISDN virtuel (vMSISDN) et/ou la IMSI respectivement IMSI virtuelle (vIMSI) pour déclencher une utilisation d'un service du réseau central de paquets mobiles.

2. Procédé selon la revendication 1, **caractérisé en ce que** la détermination de la fiabilité du réseau d'accès radio sans fil (Wi-Fi) sur le côté du dispositif mobile (UE) comprend une comparaison d'un identifiant respectivement identification utilisé pour signaler le réseau d'accès radio sans fil (Wi-Fi) au dispositif mobile (UE) avec un identifiant respectivement identification d'un réseau d'accès radio sans fil (Wi-Fi) stocké dans une liste au sein du dispositif mobile (UE).

3. Procédé selon la revendication 2, **caractérisé en ce que** l'identifiant respectivement identification signalé au dispositif mobile (UE) est le SSID (SSID : Identifiant d'Ensemble de Services) du réseau d'accès radio sans fil (Wi-Fi) et l'identifiant respectivement identification stocké dans la liste au sein du dispositif mobile (UE) est un SSID d'un réseau d'accès radio sans fil (Wi-Fi).

4. Procédé selon la revendication 2 ou la revendication 3, **caractérisé en ce que** la fiabilité du réseau d'accès radio sans fil (Wi-Fi) est déterminée par une application (application ANDSF) s'exécutant sur le côté du dispositif mobile (UE).

5. Procédé selon l'une des revendications 1 à 4, **caractérisé en ce que** la connexion tunnel sécurisée à l'entité réseau du réseau central de paquets mobiles est établie par une application (application VPN ou application TTG, ePDG) s'exécutant sur le côté du dispositif mobile (UE).

6. Procédé selon la revendication 5, **caractérisé en ce que** l'application (application VPN) établissant la connexion tunnel sécurisée à l'entité réseau du réseau central de paquets mobiles est démarrée par l'application (application ANDSF) déterminant la fiabilité du réseau d'accès radio sans fil (Wi-Fi), si le réseau d'accès radio sans fil (Wi-Fi) n'est pas fiable.

7. Procédé selon l'une des revendications 4 à 6, **caractérisé en ce que** l'application (application ANDSF) déterminant la fiabilité du réseau d'accès radio sans fil (Wi-Fi) et l'application (application VPN) établissant la connexion tunnel sécurisée à l'entité réseau du réseau central de paquets mobiles sont combinées en une application unique s'exécutant sur le côté du dispositif mobile (UE).

8. Procédé selon l'une des revendications 1 à 7, **caractérisé en ce qu'**un Serveur de Fonction de Découverte et de Sélection de Réseau d'Accès (ANDSF) du système de communication crée le certificat ou les accréditations à partir du MSISDN respectivement MSISDN virtuel (vMSISDN) et/ou de la IMSI respectivement IMSI virtuelle (vIMSI) attribuée à l'utilisateur du dispositif mobile (UE) et stocke au moins le certificat ou les accréditations créés dans une base de données (DB) du système de communication.

9. Procédé selon la revendication 8, **caractérisé en ce que** le Serveur ANDSF du système de communication envoie le certificat ou les accréditations au dispositif mobile (UE) et **en ce que** le dispositif mobile (UE) stocke le certificat respectivement accréditations au sein du dispositif mobile (UE).

10. Procédé selon l'une des revendications 1 à 9, **caractérisé en ce que** le certificat ou les accréditations sont stockés en toute sécurité dans le dispositif mobile (UE).

11. Procédé selon l'une des revendications 1 à 10, **caractérisé en ce qu'**un système d'approvisionnement du réseau central de paquets mobiles génère un MSISDN virtuel (vMSISDN) et/ou une IMSI virtuelle (vIMSI) si le dispositif mobile (UE) ne dispose pas d'une carte SIM (SIM: Module Identité d'Abonné) respectivement USIM (SIM Universelle), et signale le MSISDN virtuel généré (vMSISDN) et/ou une IMSI virtuelle (vIMSI) au Serveur ANDSF du système de communication créant le certificat ou les accréditations.

12. Système d'utilisation de services d'un réseau central de paquets mobiles dans un système de communication comprenant, un réseau central, le réseau central de paquets mobiles et un réseau d'accès radio sans fil (Wi-Fi), ledit système comprenant
un dispositif mobile (UE) comprenant
des moyens d'accès au réseau central de paquets mobiles via le réseau d'accès radio sans fil (Wi-Fi),
des moyens pour déterminer, lors de l'établissement d'une connexion du dispositif mobile (UE) au réseau d'accès radio sans fil (Wi-Fi), si le réseau d'accès radio sans fil (Wi-Fi) est un réseau d'accès radio sans fil (Wi-Fi) fiable, et
des moyens pour établir une connexion tunnel sécurisée à une entité (Serveur VPN) du réseau central de paquets mobiles pour déclencher une utilisation d'un service du réseau central de paquets mobiles par une entité d'authentification (AAA) du réseau central de paquets mobiles en utilisant un certificat ou des accréditations stockés dans le dispositif mobile (UE) comme accréditation vers l'entité (Serveur VPN) au moins si le réseau d'accès radio sans fil (Wi-Fi) n'est pas fiable, et
l'entité réseau à laquelle le dispositif mobile (UE) établit la connexion tunnel sécurisée, dans lequel l'entité réseau est un Serveur de Réseau Privé Virtuel (VPN), une Passerelle de Terminaison de Tunnel (TTG) ou une Passerelle de Données par Paquets évoluée (ePDG), l'entité réseau comprenant
des moyens pour recevoir, à partir du dispositif mobile (UE), un certificat ou des accréditations,
des moyens pour récupérer un MSISDN respectivement un MSISDN virtuel (vMSISDN) et/ou une IMSI respectivement une IMSI virtuelle (vIMSI) attribuée à un utilisateur du dispositif mobile (UE) à partir d'une base de données (DB) du système de communication à l'aide du certificat ou des accréditations reçus, et
des moyens pour transmettre le MSISDN respectivement MSISDN virtuel (vMSISDN) et/ou la IMSI respectivement IMSI virtuelle (vIMSI) récupérés à une entité d'authentification (AAA) du réseau central de paquets mobiles pour déclencher une utilisation d'un service du réseau central de paquets mobiles avec le dispositif mobile (UE).
